# EUROPEAN PATENT APPLICATION

(11) **EP 4 394 905 A1**
(43) Date of publication of application: **03.07.2024**
(21) Application number: 21958931.4
(22) Date of filing: 30.09.2021
(51) Int. Cl.: H01M 4/02

(54) **ELECTROCHEMICAL DEVICE AND ELECTRONIC DEVICE COMPRISING SAME**

(71) Applicant: Ningde Amperex Technology Limited, Ningde, Fujian 352100 (CN)
(72) Inventor: WANG, Kefei, Ningde, Fujian 352100 (CN)
(74) Representative: Klunker IP Patentanwälte PartG mbB
(86) International application number: PCT/CN2021/122314
(87) International publication number: WO 2023/050359

(57) **Abstract**

This application relates to an electrochemical device and an electronic device comprising the same. The electrochemical device of this application includes: a positive electrode, a negative electrode and an electrolytic solution, the positive electrode includes a positive electrode current collector and a positive active material layer located on the positive electrode current collector, and the positive active material layer includes a positive active material, wherein based on the mass of the positive active material layer, the mass percentage of the positive active material is M%, the value range of M is 95 to 99, the cracking width of the surface of the positive active material layer is W mm, and M and W satisfy: M/W ≥ 47.5. The electrochemical device provided by this application has reduced direct current internal resistance and improved capacity retention rate, low temperature performance and floating charge performance.

## Description

### TECHNICAL FIELD

This application relates to the field of energy storage, and in particular, to an electrochemical device and an electronic device comprising the same, particularly a lithium-ion battery.

### BACKGROUND

In recent years, with the continuous expansion of battery industrialization scale and the development of related technologies, the energy density of lithium-ion batteries has received more and more attention and challenges. In the ongoing effort to improve and enhance the energy density, the most effective solution now is to increase the coating weight of a positive electrode to reduce the use amount of inactive materials. However, when the coating weight is increased, serious coating cracking problems occur due to increased stress, which affects the consistency and electrochemical performance of the batteries.

Although an existing technology can prevent a solvent in an electrode plate from volatilizing too quickly and leading to excessive stress and cracking of a coating of the electrode plate by reducing the coating speed, lowering the temperature of an oven and thus reducing the drying speed of the electrode plate, this approach inhibits industrial production, increases the manufacturing cost, and makes it difficult to realize mass production.

### SUMMARY

Embodiments of this application aim to solve, to some extent, the problem in the prior art by providing an electrochemical device and an electronic device capable of sufficiently suppressing the growth of direct current internal resistance at high voltage and high temperature, and also effectively improving floating charge performance at high voltage.

In one embodiment, this application provides an electrochemical device. The electrochemical device includes a positive electrode, a negative electrode and an electrolytic solution, the positive electrode includes a positive electrode current collector and a positive active material layer located on the positive electrode current collector, and the positive active material layer includes a positive active material, where based on a mass of the positive active material layer, a mass percentage of the positive active material is M%, a value range of M is 95 to 99, a cracking width of a surface of the positive active material layer is W mm, and M and W satisfy: M/W ≥ 47.5.

In some embodiments, W ≤ 2.

In some embodiments, a mass per unit area of the positive active material layer is M₁ mg/1540.25 mm², and a value range of M₁ is 100 to 400, where M₁ and W satisfy: M₁/W ≥ 50.

In some embodiments, a solid content of a coating slurry of the positive active material layer is M₂%, and a value range of M₂ is 55 to 80, where M₂ and W satisfy: M₂/W ≥ 27.5.

In some embodiments, the positive electrode includes a fluorine-based binder having a melting point in a range of 155°C to 270°C.

In some embodiments, the positive active material layer includes a polymer compound having an ether bond, and based on the mass of the positive active material layer, a mass percentage of the polymer compound having the ether bond is M₄%, where M₄ ≤ 0.3.

In some embodiments, an oxidation potential of the polymer compound having the ether bond is greater than or equal to 4.6 V.

In some embodiments, the electrolytic solution includes an additive A, and the additive A includes at least one of a compound having a cyano group or a compound having an F-P-O bond.

In some embodiments, a mass percentage of the additive A is a%, and a value range of a is 0.1 to 15.

In some embodiments, M/a ≥ 6.33.

In some embodiments, the compound having the cyano group includes at least one of the following compounds: succinonitrile, glutaronitrile, adipic dinitrile, 1,5-dicyanopentane, 1,6-dicyanohexane, tetramethylsuccinonitrile, 2-methyl glutaronitrile, 2,4-dimethylglutaronitrile, 2,2,4,4-tetramethyl glutaronitrile, 1,4-dicyanopentane, 1,2-dicyanobenzene, 1,3-dicyanobenzene, 1,4-dicyanobenzene, ethylene glycol bis(propionitrile) ether, 3,5-dioxane-heptanedinitrile, 1,4-bis(cyanoethoxy)butane, diethylene glycol bis(2-cyanoethyl) ether, triethylene glycol bis(2-cyanoethyl) ether, tetraethylene glycol bis(2-cyanoethyl) ether, 1,3-bis(2-cyanoethoxy)propane, 1,4-bis(2-cyanoethoxy)butane, 1,5-bis(2-cyanoethoxy)pentane, ethylene glycol bis(4-cyanobutyl) ether, 1,4-dicyano-2-butene, 1,4-dicyano-2-methyl-2-butene, 1,4-dicyano-2-ethyl-2-butene, 1,4-dicyano-2,3-dimethyl-2-butene, 1,4-dicyano-2,3-diethyl-2-butene, 1,6-dicyano-3-hexene, 1,6-dicyano-2-methyl-3-hexene, 1,3,5-pentanetricarbonitrile,1,2,3-propanetricarbonitrile, 1,3,6-hexyltricarbonitrile, 1,2,6-hexyltricarbonitrile, 1,2,3-tris(2-cyanoethoxy)propane, 1,2,4-tris(2-cyanoethoxy)butane, 1,1,1-tris(cyanoethoxy methylene)ethane, 1,1,1-tris(cyanoethoxy methylene)propane, 3-methyl-1,3,5-tris(cyanoethoxy)pentane, 1,2,7-tris(cyanoethoxy)heptane, 1,2,6-tris(cyanoethoxy)hexane or 1,2,5-tris(cyanoethoxy)pentane.

In some embodiments, the compound having the F-P-O bond includes at least one of lithium difluorophosphate, a compound of Formula 1, a compound of Formula 2, a compound of Formula 3, or a compound of Formula 4: 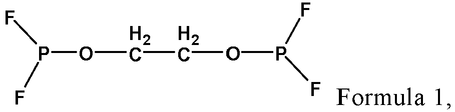 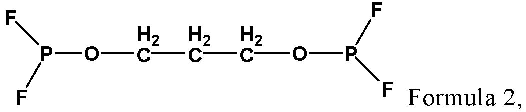 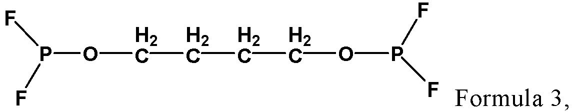 and

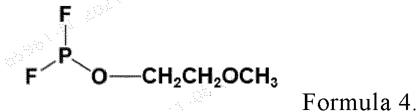

In some embodiments, the positive active material satisfies one of the following conditions:
(1) the positive active material includes lithium iron phosphate, and the positive active material has a D50 of D₁ µm, where 2 × D₁ ≥ W;
(2) the positive active material includes lithium manganese iron phosphate, and the positive active material has a D50 of D₂ µm, where 5 × D₂ ≥ W;
(3) the positive active material includes lithium manganate, and the positive active material has a D50 of D₃ µm, where 0.1 × D₃ ≥ W;
(4) the positive active material includes lithium nickel cobalt manganate, and the positive active material has a D50 of D₄ µm, where 0.15 × D₄ ≥ W; and
(5) the positive active material includes lithium cobalt oxide, and the positive active material has a D50 of D₅ µm, where 0.15 × D₅ ≥ W.

By selecting a suitable particle size, this application can further regulate the flatness of the surface of a positive electrode plate, thereby improving the performance of a lithium-ion battery.

In some embodiments, the electrolytic solution further includes an additive B, and the additive B includes at least one of fluoroethylene carbonate, 1,3-propane sutone, ethylene sulfate, vinylethylene carbonate, or phosphate cyclic anhydride.

In another embodiment, this application provides an electronic device. The electronic device includes the electrochemical device according to the embodiments of this application.

The electrochemical device provided by this application has reduced direct current internal resistance and improved capacity retention rate, low temperature performance and floating charge performance.

The additional aspects and advantages of the embodiments of this application may be partially described and shown in the subsequent description or illustrated by the implementation of the embodiments of this application.

### BRIEF DESCRIPTION OF DRAWINGS

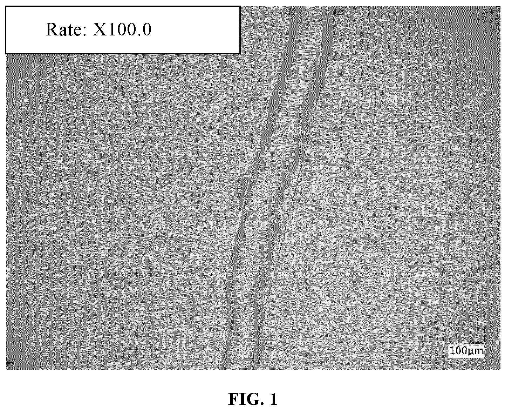

FIG. 1 illustrates an SEM picture of a surface of a positive active material layer in Embodiments 1-8 of this application.

### DETAILED DESCRIPTION OF EMBODIMENTS

Embodiments of this application may be described in detail below. The embodiments of this application shall not be explained as limiting this application.

In addition, quantities, ratios, and other values are sometimes presented herein in a range format. It should be understood that such range formats are used for convenience and brevity, and it should be flexibly understood that such range formats not only include values explicitly designated as limitations of a range, but also include all individual values or subranges in the range as if each value and subrange were explicitly designated.

In specific implementations and claims, the list of items linked by the terms "one of", "one in", "one kind of" or other similar terms may imply any of the listed items. For example, if items A and B are listed, the phrase "one of A and B" means A only or B only. In another example, if items A, B and C are listed, the phrase "one of A, B and C" means A only, B only, or C only. Item A may contain a single component or a plurality of components. Item B may contain a single component or a plurality of components. Item C may contain a single component or a plurality of components.

In specific implementations and claims, the list of items linked by the terms "at least one of", "at least one in", "at least one kind of" or other similar terms may imply any combinations of the listed items. For example, if items A and B are listed, the phrase "at least one of A and B" means A only, B only, or A and B. In another example, if items A, B and C are listed, the phrase "at least one of A, B and C" means A only; B only; C only; A and B (exclude C); A and C (exclude B); B and C (exclude A); or A, B and C in their entirety. Item A may contain a single component or a plurality of components. Item B may contain a single component or a plurality of components. Item C may contain a single component or a plurality of components.

### I. Electrochemical device

In some embodiments, this application provides an electrochemical device. The electrochemical device includes a positive electrode, a negative electrode and an electrolytic solution.

### Positive electrode

### 1. Positive active material layer

In some embodiments, the positive electrode includes a positive electrode current collector and a positive active material layer located on the positive electrode current collector, and the positive active material layer includes a positive active material. In some embodiments, the positive active material layer may be one or more. In some embodiments, each of a plurality of positive active material layers may contain the same or different positive active materials. The positive active material is any material capable of reversibly embedding into and de-embedding from metal ions, such as lithium ions. In some embodiments, the discharge capacity of the positive active material is less than the rechargeable capacity of a negative active material to prevent unintentional precipitation of lithium metal on a negative electrode during charging.

### (1) Cracking width of surface of positive active material layer

In some embodiments, based on a mass of the positive active material layer, a mass percentage of the positive active material is M%, and a value range of M is 95 to 99.

In some embodiments, M is 95, 96, 97, 98, 99 or within a range of any two of these values. When the mass percentage of the positive active material in the positive active material layer is higher than 95%, the energy density of the electrochemical device can be significantly increased.

In some embodiments, a cracking width of the surface of the positive active material layer is W mm, and W ≤ 2. In some embodiments, W is 0.01, 0.02, 0.03, 0.05, 0.08, 0.1, 0.15, 0.2, 0.3, 0.4, 0.5, 0.6, 0.7, 0.8, 0.9, 1.0, 1.4, 1.5, 1.8, 2 or within a range of any two of these values. When the cracking width of the surface of the positive active material layer is infinitesimally small, especially when it is absent, the floating charge performance of the electrochemical device at high voltage can be obviously improved.

In some embodiments, M and W satisfy: M/W ≥ 47.5. In some embodiments, M/W is 47.5, 50, 60, 80, 90, 100, 120, 150, 200, 300, 400, 500, 100, 1500, 1800, 2000, 5000, 8000, 9000, 10000, 15000, 18000, 20000 or within a range consisting of any two of these values.

When the positive electrode satisfies the above relationship, not only can the interfacial stability of the positive active material layer be improved, but also the growth of direct current internal resistance of the electrochemical device at room temperature and high temperature can be sufficiently suppressed, and the floating charge performance at high voltage is unexpectedly improved.

The cracking width of the surface of the positive active material layer can reflect the surface property of the positive active material layer, and is one of parameters to characterize the positive active material layer. The smaller the cracking width, the better the interfacial flatness of the positive active material layer, which can significantly improve the cycling performance, rate performance , floating charge performance, and reduce direct current internal resistance of the electrochemical device. The cracking width of the positive active material layer may be affected by a variety of factors, mainly including the coating weight of the positive active material layer, the compaction density of the positive active material layer, the solid content of a coating slurry of the positive active material layer, the particle size of the positive active material, the content of the positive active material, a binder of the positive active material layer, an auxiliary of the positive active material layer, a functional treatment layer on the surface of the positive active material layer, the porosity of the positive active material layer, and the like.

Cracking in this application refers to cracks generated on the surface of the positive active material layer when the positive active material layer is subjected to internal stress, external impact, environmental conditions, and the like. The cracking width of the surface of the positive active material layer described in this application is the largest cracking width of all cracks, which can be determined by means of a measuring scale or with the aid of other instruments for testing dimensions.

### (2) Mass of positive active material layer

In some embodiments, a mass per unit area of the positive active material layer is M₁ mg/1540.25 mm², and a value range of M₁ is 100 to 400. In some embodiments, M₁ is 100, 120, 140, 150, 160, 180, 200, 240, 250, 270, 280, 290, 300, 350, 380, 400 or within a range of any two of these values. When the value range of M₁ is 100 to 400, the surface of the positive electrode can maintain structural stability during the charge/discharge cycle, which further improves the performance of a lithium-ion battery. If the value of M₁ is more than 400, an active layer is too thick, the permeability of the electrolytic solution is reduced, and at the same time, the electron transport in the battery may be difficult, which causes an increase in the polarization of the battery, thus leading to deterioration of the high-current-density charging and discharging characteristics. In addition, if the value of M₁ is lower than 100, the active layer produces large impact on the current collector during processing, which destroys a current collector interface, and at the same time, the relative displacement between active materials increases, which affects the performance.

In some embodiments, M₁ and W satisfy: M₁/W ≥ 50. In some embodiments, M₁ and W satisfy: M₁/W is 50, 80, 100, 150, 200, 250, 300, 350, 400, 500 or within a range of any two of these values. The further improvement effect can be obtained when the positive electrode satisfies the above relationship.

### (3) Solid content of coating slurry of positive active material layer

In some embodiments, the solid content of the coating slurry of the positive active material layer is M₂%, and a value range of M₂ is 55 to 80. In some embodiments, M₂ is 55, 58, 60, 63, 65, 68, 70, 72, 75, 78, 80 or within a range of any two of these values. When the value range of M₂ is 55 to 80, there are fewer defects on the surface of the positive electrode, which further improves the performance of the lithium-ion battery. When the value of M₂ exceeds this range, an electrode plate cracks seriously during baking. In addition, if the value of M₂ is lower than this range, a solvent may be wasted and baking time may be prolonged during the preparation of the positive active material layer, which may result in process losses.

In some embodiments, M₂ and W satisfy: M₂/W ≥ 27.5. In some embodiments, M₂/W is 27.5, 30, 32, 35, 38, 40, 45, 50, 60, 70, 80, 90, 100, 120, 200, 300, 350, 370, 400, 500, 600, 700, 800, 1000, 1100, 1400, 1500, 3000, 5000, 7000, 9000, 10000, 16000, 20000 or within a range of any two of these values. The further improvement effect can be obtained when the positive electrode satisfies the above relationship.

### (4) Binder in positive active material layer

In some embodiments, the positive electrode includes a fluorine-based binder having a melting point in a range of 155°C to 270°C. In some embodiments, the fluorine-based binder has the melting point of 155°C, 160°C, 165°C, 170°C, 172°C, 175°C, 180°C, 200°C, 220°C, 220°C, 230°C, 240°C, 250°C, 260°C, 270 °C or within a range consisting of any two of these values.

When the fluorine-based binder having the melting point in the range of 155°C to 270°C is used, excellent direct current internal resistance at high temperature and high voltage and floating charge performance at high temperature and high voltage are also obtained. In particular, when the fluorine-based binder having the melting point in the range of 155°C to 260°C is used, the fluorine-based binder can be further uniformly distributed on the surface of positive electrode material particles in the baking or hot pressing step of an electrode plate preparation process, which effectively improves the adhesion effect, suppresses defects on the surface of the electrode plate, and further improves the performance of the lithium-ion battery.

In some embodiments, the fluorine-based binder includes polyvinylidene difluoride. In some embodiments, the polyvinylidene difluoride includes a homopolymer with vinylidene fluoride as a monomer, and a copolymer with vinylidene fluoride (VdF) as a monomer. In some embodiments, the end of the polyvinylidene difluoride may be modified with maleic acid.

In some embodiments, based on the mass of the positive active material layer, a mass percentage of the fluorine-based binder is 0.5% to 3%. In some embodiments, based on the mass of the positive active material layer, the mass percentage of the fluorine-based binder is 0.5%, 0.8%, 1.0%, 1.5%, 1.8%, 2.0%, 2.2%, 2.5%, 2.8%, 3% or within a range of any two of these values.

When the content of the fluorine-based binder is less than 0.5%, the coverage of the positive active material particles by the fluorine-based binder becomes insufficient, the bonding property decreases, and the cracking phenomenon is aggravated. On the other hand, when the content of the fluorine-based binder exceeds 3%, the positive active material particles are excessively covered with the fluorine-based binder, resulting in an increase in the direct current resistance, the high discharge rate performance cannot be obtained in a low-temperature environment and the good floating charge performance cannot be obtained in a high-temperature environment.

### (5) Auxiliary in positive active material layer

In some embodiments, the positive active material layer includes an auxiliary. In some embodiments, the auxiliary includes a polymer compound having an ether bond, where based on the mass of the positive active material layer, a mass percentage of the polymer compound having the ether bond is M₄%, and M₄ ≤ 0.3.

In some embodiments, M₄ is 0.04, 0.05, 0.06, 0.07, 0.08, 0.1, 0.12, 0.14, 0.15, 0.18, 0.2, 0.25, 0.28, 0.3 or within a range of any two of these values. When the content of the auxiliary is within the above range, the following characteristics of the electrochemical device are improved: output power characteristic, load characteristic, low temperature characteristic, cycling characteristic, high temperature storage characteristic, and the like.

In some embodiments, an oxidation potential of the polymer compound having the ether bond is greater than or equal to 4.6 V. In some embodiments, the oxidation potential of the polymer compound having the ether bond is 4.6 V, 4.7 V, 4.8 V, 4.9 V, 5.0 V, 5.1 V, 5.2 V, 5.3 V, 5.4 V, 5.5 V, 5.6 V, 6 V or within a range of any two of these values. When the oxidation potential of the auxiliary is within the above range, the electrochemical device is stable in electrochemical performance and resistant to high voltage, which helps to improve the floating charge performance of the electrochemical device at high temperature and high voltage.

In some embodiments, the polymer compound having the ether bond includes at least one of polyethylene oxide, polyether, polyalcohol, or polyalcohol ester.

### (6) Positive active material

In some embodiments, there is no particular limitation on the type of the positive active material, as long as the material is capable of electrochemically occluding and releasing metal ions (e.g., lithium ions). In some embodiments, the positive active material is a material containing lithium and at least one transition metal. Examples of the positive active material may include, but are not limited to, a lithium transition metal composite oxide and a lithium-containing transition metal phosphate compound.

In some embodiments, the transition metal in the lithium transition metal composite oxide includes V, Ti, Cr, Mn, Fe, Co, Ni, Cu, and the like. In some embodiments, the lithium transition metal composite oxide includes a lithium-cobalt composite oxide such as LiCoO₂, a lithium-nickel composite oxide such as LiNiO₂, a lithium-manganese composite oxide such as LiMnO₂, LiMn₂O₄ and Li₂MnO₄, a lithium-nickel-manganese-cobalt composite oxide such as LiNi_{1/3}Mn_{1/3}Co_{1/3}O₂ and LiNi_{0.5}Mn_{0.3}Co_{0.2}O₂, where part of transition metal atoms that are the main body of these lithium transition metal composite oxides are replaced with other elements such as Na, K, B, F, Al, Ti, V, Cr, Mn, Fe, Co, Li, Ni, Cu, Zn, Mg, Ga, Zr, Si, Nb, Mo, Sn, and W. Examples of the lithium transition metal composite oxide may include, but are not limited to, LiNi_{0.5}Mn_{0.5}O₂, LiNi_{0.85}Co_{0.10}Al_{0.05}O₂, LiNi_{0.33}CO_{0.33}Mn_{0.33}O₂, LiNi_{0.45}Co_{0.10}Al_{0.45}O₂, LiMn_{1.8}Al_{0.2}O₄, and LiMn_{1.5} Ni_{0.5}O₄ and the like. Examples of combinations of lithium transition metal composite oxides include, but are not limited to, a combination of LiCoO₂ with LiMn₂O₄, where part of the Mn in the LiMn₂O₄ may be replaced with a transition metal (e.g., LiNi_{0.33}Co_{0.33}Mn_{0.33}O₂), and part of the Co in the LiCoO₂ may be replaced with a transition metal.

In some embodiments, the transition metal in the lithium-containing transition metal phosphate compound includes V, Ti, Cr, Mn, Fe, Co, Ni, Cu, and the like. In some embodiments, the lithium-containing transition metal phosphate compound includes iron phosphate such as LiFePO₄, Li₃Fe₂(PO₄)₃, and LiFeP₂O₇, and cobalt phosphate such as LiCoPO₄, where part of transition metal atoms that are the main body of these lithium-containing transition metal phosphate compounds are replaced with other elements such as Al, Ti, V, Cr, Mn, Fe, Co, Li, Ni, Cu, Zn, Mg, Ga, Zr, Nb, and Si.

In some embodiments, the positive active material includes lithium phosphate, which can improve the continuous charging characteristic of the electrochemical device. There is no limitation on the use of the lithium phosphate. In some embodiments, the positive active material and the lithium phosphate are mixed for use. In some embodiments, the mass percentage of the lithium phosphate is greater than 0.1%, greater than 0.3%, or greater than 0.5% relative to the mass of the positive active material and the lithium phosphate described above. In some embodiments, the mass percentage of the lithium phosphate is less than 10%, less than 8%, or less than 5% relative to the mass of the positive active material and the lithium phosphate described above. In some embodiments, the content of the lithium phosphate is within the range of any two of the above values.

A material having a composition different from that of the above-mentioned positive active material may be attached to the surface of the positive active material. Examples of the surface-attached material may include, but are not limited to: oxides such as aluminum oxide, silicon dioxide, titanium dioxide, zirconium oxide, magnesium oxide, calcium oxide, boron oxide, antimony oxide and bismuth oxide; sulphates such as lithium sulphate, sodium sulphate, potassium sulphate, magnesium sulphate, calcium sulphate and aluminium sulphate; carbonates such as lithium carbonate, calcium carbonate and magnesium carbonate; carbon, and the like.

These surface-attached materials may be attached to the surface of the positive active material by the following method: a method for adding the surface-attached material into the positive active material by permeation by dissolving or suspending the surface-attached material in a solvent, and drying; a method for dissolving or suspending a surface-attached material precursor in a solvent, and then reacting same by heating or the like after adding same into the positive active material by permeation; a method for adding the surface-attached material into a positive electrode precursor and firing at the same time, and the like. In the case of attaching carbon, a method of mechanically attaching a carbon material (e.g., activated carbon.) may also be used.

In some embodiments, based on the mass of the positive active material layer, the content of the surface-attached material is greater than 0.1 ppm, greater than 1 ppm, or greater than 10 ppm. In some embodiments, based on the mass of the positive active material layer, the content of the surface-attached material is less than 10%, less than 5%, or less than 2%. In some embodiments, based on the mass of the positive active material layer, the content of the surface-attached material is within a range of any two of the above values.

By attaching the material to the surface of the positive active material, the oxidation reaction of the electrolytic solution on the surface of the positive active material can be suppressed, and the life of the electrochemical device can be prolonged. When the amount of the surface-attached material is too small, the effect thereof cannot be fully expressed; and when the amount of the surface-attached material is too large, the entry and exit of lithium ions are hindered, and thus the resistance sometimes increases.

In this application, the positive active material with the surface attached with the material having the composition different from the positive active material is also referred to as a "positive active material".

In some embodiments, the shape of the positive active material particles includes, but is not limited to, blocky, polyhedral, spherical, ellipsoidal, plate-like, needle-like, columnar and other shapes. In some embodiments, the positive active material particles include primary particles, secondary particles or combinations thereof. In some embodiments, the primary particles may agglomerate to form the secondary particles.

In some embodiments, the tap density of the positive active material is greater than 0.5 g/cm³, greater than 0.8 g/cm³, or greater than 1.0 g/cm³. When the tap density of the positive active material is within the above range, the amount of dispersing media required for the formation of the positive active material layer and the amount of conductive materials and the positive electrode binder required can be suppressed, and the filling ratio of the positive active material and the capacity of the electrochemical device can be ensured. By using composite oxide powder with high tap density, the positive active material layer with high density can be formed. Larger tap densities are usually preferred, with no particular upper limit. In some embodiments, the tap density of the positive active material is less than 4.0 g/cm³, less than 3.7 g/cm³, or less than 3.5 g/cm³. When the tap density of the positive active material has the upper limit as described above, decrease of the load characteristic can be suppressed.

The tap density of the positive active material may be calculated by the following mode: putting 5 g to 10 g of positive active material powder into a 10-mL glass measuring cylinder and vibrating for 200 times at a stroke of 20 mm, to obtain a powder filling density (tap density).

When the positive active material particles are the primary particles, the median particle size (D50) of the positive active material particles refers to a primary particle size of the positive active material particles. When the primary particles of the positive active material particles agglomerate to form the secondary particles, the median particle size (D50) of the positive active material particles refers to a secondary particle size of the positive active material particles.

In some embodiments, the median particle size (D50) of the positive active material particles is greater than 0.3 µm, greater than 0.5 µm, greater than 0.8 µm, or greater than 1.0 µm. In some embodiments, the median particle size (D50) of the positive active material particles is less than 30 µm, less than 27 µm, less than 25 µm, or less than 22 µm. In some embodiments, the median particle size (D50) of the positive active material particles is within a range of any two of the above values. When the median particle size (D50) of the positive active material particles is within the above range, the positive active material with high tap density can be obtained, and decrease of the performance of the electrochemical device can be suppressed. On the other hand, in the preparation process of the positive electrode of the electrochemical device (i.e., when the positive active material, the conductive materials, the binder, etc., are slurried with a solvent and coated in a thin film form), problems such as the generation of streaks can be prevented. Herein, by mixing two or more positive active materials having different median particle sizes, the fillability during the positive electrode preparation can be further improved.

The median particle size (D50) of the positive active material particles may be determined using a laser diffraction/scattering particle size distribution measurement apparatus: In the case of using the LA-920 manufactured by HORIBA as a particle size distribution meter, 0.1% aqueous sodium hexametaphosphate is used as a dispersing medium for the measurement, and the measurement refractive index is set to 1.24 for measurement after 5 minutes of ultrasonic dispersion.

In some embodiments, the positive active material satisfies one of the following conditions:
(1) the positive active material includes lithium iron phosphate, and the positive active material has a D50 of D₁ µm, wheren 2 x D₁ ≥ W;
(2) the positive active material includes lithium manganese iron phosphate, and the positive active material has a D50 of D₂ µm, where 5 × D₂ ≥ W;
(3) the positive active material includes lithium manganate, and the positive active material has a D50 of D₃ µm, where 0.1 × D₃ ≥ W;
(4) the positive active material includes lithium nickel cobalt manganate, and the positive active material has a D50 of D₄ µm, where 0.15 × D₄ ≥ W; and
(5) the positive active material includes lithium cobalt oxide, and the positive active material has a D50 of D₅ µm, where 0.15 × D₅ ≥ W.

In some embodiments, the above positive active material such as lithium iron phosphate, lithium manganese iron phosphate, lithium manganate, lithium nickel cobalt manganate, and lithium cobalt oxide may be used alone or in any combination. By selecting the suitable particle size, the flatness of the surface of the positive electrode plate, the tap density of the electrode plate and the like can be further regulated, thereby improving the performance of the lithium-ion battery.

In some embodiments, the positive active material layer further includes a conductive agent. In some embodiments, the conductive agent includes at least one of carbon nanotubes, carbon fibers, acetylene black, graphene, Ketjen black, or carbon black.

In some embodiments, the positive electrode current collector includes at least one of a copper foil or an aluminum foil.

In some embodiments, the positive electrode may be prepared by a preparation method known in the art. For example, the positive electrode may be obtained by the following method: mixing the positive electrode active material, the conductive agent, and the binder in a solvent to prepare an active material composition, and coating the current collector with the active material composition. In some embodiments, the solvent may include, but not limited to, N-methylpyrrolidone and the like.

### 2. Electrolytic solution

In some embodiments, the electrolytic solution used in the electrochemical device of this application includes an electrolyte and a solvent for dissolving the electrolyte. In some embodiments, the electrolytic solution includes an additive A, and the additive A includes at least one of a compound having a cyano group or a compound having an F-P-O bond.

When the compound having the cyano group or the compound having the F-P-O bond is added into the electrolytic solution, excellent direct current internal resistance at high temperature and high voltage and floating charge performance at high temperature and high voltage can be obtained. In particular, when the compound having the cyano group and the compound having the F-P-O bond are used in combination, the surface defects of the electrode plate brought by the decomposition and reconstruction of a protective film on the surface of the positive electrode in the cycling process can be further suppressed, and thus the performance of the lithium-ion battery can be improved.

In some embodiments, a mass percentage of the additive A is a%, and a value range of a is 0.1 to 15. In some embodiments, a is 0.1, 0.4, 0.5, 0.8, 1, 1.5, 1.8, 2, 2.5, 3, 3.5, 4, 5, 6, 7, 8, 9, 10, 11, 12, 13, 14, 15 or within a range of any two of these values.

In some embodiments, M/a is 6.33, 8, 10, 15, 20, 24, 28, 30, 32, 35, 40, 45, 50, 100, 150, 190, 200, 250 or within a range of any two of these values. When the above relationship is satisfied, the consistency of the surface of the electrode plate is better maintained in the cycling process, thereby not only further improving the direct current internal resistance at high temperature and high voltage and the floating charge performance at high temperature and high voltage, but also, unexpectedly, improving the capacity retention rate at high voltage and the rate performance at low temperature at the same time, which may be attributed to the fact that at both high voltage and low temperature, an interface formed between the positive electrode and the electrolytic solution has good stability and low impedance, to make de-intercalation of lithium ions easier.

In some embodiments, the compound having the cyano group includes at least one of the following compounds: succinonitrile, glutaronitrile, adipic dinitrile, 1,5-dicyanopentane, 1,6-dicyanohexane, tetramethylsuccinonitrile, 2-methyl glutaronitrile, 2,4-dimethylglutaronitrile, 2,2,4,4-tetramethyl glutaronitrile, 1,4-dicyanopentane, 1,2-dicyanobenzene, 1,3-dicyanobenzene, 1,4-dicyanobenzene, ethylene glycol bis(propionitrile) ether, 3,5-dioxane-heptanedinitrile, 1,4-bis(cyanoethoxy)butane, diethylene glycol bis(2-cyanoethyl) ether, triethylene glycol bis(2-cyanoethyl) ether, tetraethylene glycol bis(2-cyanoethyl) ether, 1,3-bis(2-cyanoethoxy)propane, 1,4-bis(2-cyanoethoxy)butane, 1,5-bis(2-cyanoethoxy)pentane, ethylene glycol bis(4-cyanobutyl) ether, 1,4-dicyano-2-butene, 1,4-dicyano-2-methyl-2-butene, 1,4-dicyano-2-ethyl-2-butene, 1,4-dicyano-2,3-dimethyl-2-butene, 1,4-dicyano-2,3-diethyl-2-butene, 1,6-dicyano-3-hexene, 1,6-dicyano-2-methyl-3-hexene, 1,3,5-pentanetricarbonitrile,1,2,3-propanetricarbonitrile, 1,3,6-hexyltricarbonitrile, 1,2,6-hexyltricarbonitrile, 1,2,3-tris(2-cyanoethoxy)propane, 1,2,4-tris(2-cyanoethoxy)butane, 1,1,1-tris(cyanoethoxy methylene)ethane, 1,1,1-tris(cyanoethoxy methylene)propane, 3-methyl-1,3,5-tris(cyanoethoxy)pentane, 1,2,7-tris(cyanoethoxy)heptane, 1,2,6-tris(cyanoethoxy)hexane or 1,2,5-tris(cyanoethoxy)pentane.

In some embodiments, the compound having the F-P-O bond includes at least one of lithium difluorophosphate, a compound of Formula 1, a compound of Formula 2, a compound of Formula 3, or a compound of Formula 4: 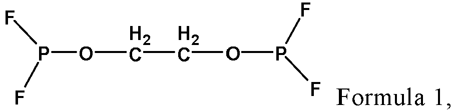 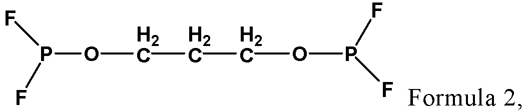 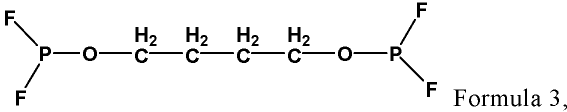 and

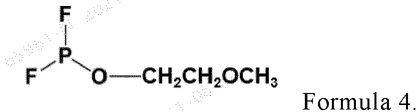

In some embodiments, the electrolytic solution further includes an additive B, and the additive B includes at least one of fluoroethylene carbonate, 1,3-propane sutone, ethylene sulfate, vinylethylene carbonate, or phosphate cyclic anhydride.

In some embodiments, the electrolytic solution further includes any non-aqueous solvent known in the prior art that can be used as a solvent for the electrolytic solution.

In some embodiments, the non-aqueous solvent includes, but is not limited to, one or more of the followings: cyclic carbonic ester, chain carbonic ester, cyclic carboxylic ester, chain carboxylic ester, cyclic ether, chain ether, phosphorus-containing organic solvent, sulfur-containing organic solvent, and aromatic fluorinated solvent.

In some embodiments, examples of the cyclic carbonic ester include, but are not limited to, one or more of the followings: ethylene carbonate (EC), propylene carbonate (PC) and butylidene carbonate. In some embodiments, the cyclic carbonic ester has 3-6 carbon atoms.

In some embodiments, examples of the chain carbonic ester include, but are not limited to, one or more of the followings: chain carbonic ester such as dimethyl carbonate, methyl ethyl carbonate, diethyl ethyl carbonate (DEC), methyl n-propyl carbonate, ethyl n-propyl carbonate, and di-n-propyl carbonate. Examples of fluorine-substituted chain carbonic ester include, but are not limited to, one or more of the followings: bis(fluoromethyl) carbonate, bis(difluoromethyl) carbonate, bis(trifluoromethyl) carbonate, bis(2-fluoroethyl) carbonate, bis(2,2-difluoroethyl) carbonate, bis(2,2,2-trifluoroethyl) carbonate, 2-fluoroethylmethyl carbonate, 2,2-difluoroethylmethyl carbonate, 2,2,2-trifluoroethylmethyl carbonate, and the like.

In some embodiments, examples of the cyclic carboxylic ester may include, but are not limited to, one or more of the followings: one or more of γ-butyrolactone and γ-valerolactone. In some embodiments, some of hydrogen atoms of the cyclic carboxylic ester may be replaced with fluorine.

In some embodiments, examples of the chain carboxylic ester may include, but are not limited to, one or more of the followings: methyl acetate, ethyl acetate, propyl acetate, isopropyl acetate, butyl acetate, sec-butyl acetate, isobutyl acetate, tert-butyl acetate, methyl propionate, ethyl propionate, propyl propionate, isopropyl propionate, methyl butyrate, ethyl butyrate, propyl butyrate, methyl isobutyrate, ethyl isobutyrate, methyl valerate, ethyl valerate, methyl pivalate, ethyl pivalate, and the like. In some embodiments, some of hydrogen atoms of the chain carboxylic ester may be replaced with fluorine. In some embodiments, examples of the fluorine-substituted chain carbonic ester may include, but are not limited to, methyl trifluoroacetate, ethyl trifluoroacetate, propyl trifluoroacetate, butyl trifluoroacetate, 2,2,2-trifluoroethyl trifluoroacetate, and the like.

In some embodiments, examples of the cyclic ether may include, but are not limited to, one or more of the followings: tetrahydrofuran, 2-methyltetrahydrofuran, 1,3-dioxolane, 2-methyl 1,3-dioxolane, 4-methyl 1,3-dioxolane, 1,3-dioxane, 1,4-dioxolane and dimethoxypropane.

In some embodiments, examples of the chain ether may include, but are not limited to, one or more of the followings: dimethoxymethane, 1,1-dimethoxyethane, 1,2-dimethoxyethane, diethoxymethane, 1,1-diethoxyethane, 1,2-diethoxyethane, ethoxymethoxymethane, 1,1-ethoxymethoxyethane, 1,2-ethoxymethoxyethane, and the like.

In some embodiments, examples of the phosphorus-containing organic solvent may include, but are not limited to, one or more of the followings: trimethyl phosphate, triethyl phosphate, dimethylethyl phosphate, diethyl methyl phosphate, ethylidene methyl phosphate, ethylidene ethyl phosphate, triphenyl phosphate, trimethyl phosphite, triethyl phosphite, triphenyl phosphite, tris(2,2,2-trifluoroethyl) phosphate, tris(2,2,3,3,3-pentafluoropropyl) phosphate, and the like.

In some embodiments, examples of the sulfur-containing organic solvent may include, but are not limited to, one or more of the followings: sulfolane, 2-methylsulfolane, 3-methylsulfolane, dimethyl sulfone, diethyl sulfone, ethyl methyl sulfone, methyl propyl sulfone, dimethyl sulfoxide, methyl methanesulfonate, ethyl methanesulfonate, methyl ethanesulfonate, ethyl ethanesulfonate, dimethyl sulfate, diethyl sulfate, and dibutyl sulfate. In some embodiments, some of hydrogen atoms of the sulfur-containing organic solvent may be replaced with fluorine.

In some embodiments, the aromatic fluorinated solvent includes, but is not limited to, one or more of the followings: fluorobenzene, difluorobenzene, trifluorobenzene, tetrafluorobenzene, pentafluorobenzene, hexafluorobenzene and trifluoromethylbenzene.

In some embodiments, the solvent used in the electrolytic solution of this application includes cyclic carbonic ester, chain carbonic ester, cyclic carboxylic ester, chain carboxylic ester, and combinations thereof. In some embodiments, the solvent used in the electrolytic solution of this application includes an organic solvent selected from a group consisting of the following materials: ethylene carbonate, propylene carbonate, diethyl ethyl carbonate, ethyl propionate, propyl propionate, n-propyl acetate, ethyl acetate and combinations thereof. In some embodiments, the solvent used in the electrolytic solution of this application includes: ethylene carbonate, propylene carbonate, diethyl ethyl carbonate, ethyl propionate, propyl propionate, γ-butyrolactone and combinations thereof.

In some embodiments, the electrolyte is not particularly limited and materials that are well known as electrolytes may be used arbitrarily. In the case of lithium secondary batteries, lithium salts are usually used. Examples of the electrolyte may include, but are not limited to, inorganic lithium salts such as LiPF₆, LiBF₄, LiClO₄, LiAlF₄, LiSbF₆, and LiWF₇; lithium tungstates such as LiWOFs; lithium carboxylate salts such as HCO₂Li, CH₃CO₂Li, CH₂FCO₂Li, CHF₂CO₂Li, CF₃CO₂Li, CF₃CH₂CO₂Li, CF₃CF₂CO₂Li, CF₃CF₂CF₂CO₂Li, and CF₃CF₂CF₂CF₂CO₂Li; lithium sulfonate salts such as FSO₃Li, CH₃SO₃Li, CH₂FSO₃Li, CHF₂SO₃Li, CF₃SO₃Li, CF₃CF₂SO₃Li, CF₃CF₂CF₂SO₃Li and CF₃CF₂CF₂CF₂SO₃Li; imide lithium salts such as LiN(FCO)₂, LiN(FCO)(FSO₂), LiN(FSO₂)₂, LiN(FSO₂)(CF₃SO₂), LiN(CF₃SO₂)₂, LiN(C₂F₅SO₂)₂, cyclic 1,2-perfluoroethylene bis(sulfoximide) lithium, cyclic 1,3-perfluoropropane bis(sulfoximide) lithium, and LiN(CF₃SO₂)(C₄F₉SO₂); methylated lithium salts such as LiC(FSO₂)₃, LiC(CF₃SO₂)₃, and LiC(C₂F₅SO₂)₃; (malonate-coated) borate lithium salts such as bis(malonate-coated) borate lithium salts, and difluoro(malonate-coated) borate lithium salts; lithium (malonate-coated) phosphate salts such as tris(malonate-coated) lithium phosphate, lithium difluorobis(malonate-coated) phosphate, and lithium tetrafluorobis(malonate-coated) phosphate; fluorine-containing lithium organolithium salts such as LiPF₄(CF₃)₂, LiPF₄(C₂F₅)₂, LiPF₄(CF₃SO₂)₂, LiPF₄(C₂F₅SO₂)₂, LiBF₃CF₃, LiBF₃C₂F₅, LiBF₃C₃F₇, LiBF₂(CF₃)₂, LiBF₂(C₂F₅)₂, LiBF₂(CF₃SO₂)₂, and LiBF₂(C₂F₅SO₂)₂; lithium oxalate-boronate salts such as lithium difluoro-oxalate-boronate, and lithium bis(oxalate) boronate; oxalate-combined lithium phosphates such as tetrafluoro oxalate-combined lithium phosphate, difluoro bis(oxalate) lithium phosphate, and tris(oxalate) lithium phosphate, and the like.

In some embodiments, the electrolyte is selected from LiPF₆, LiSbF₆, FSO₃Li, CF₃SO₃Li, LiN(FSO₂)₂, LiN(FSO₂)(CF₃SO₂), LiN(CF₃SO₂)₂, LiN(C₂F₅SO₂)₂, cyclic 1,2-perfluoroethylene bis(sulfoximide) lithium, cyclic 1,3-perfluoropropane bis(sulfoximide) lithium, LiC(FSO₂)₃, LiC(CF₃SO₂)₃, LiC(C₂F₅SO₂)₃, LiBF₃CF₃, LiBF₃C₂F₅, LiPF₃(CF₃)₃, LiPF₃(C₂F₅)₃, lithium difluoro-oxalate-boronate, lithium bis(oxalate) boronate, or difluoro bis(oxalate) lithium phosphate, which is beneficial to the improvement of the output power characteristic, high-rate charging and discharging characteristic, high-temperature storage characteristic and cycling characteristic, etc. of the electrochemical device.

The content of the electrolyte is not specifically limited, as long as it does not impair the effect of this application. In some embodiments, a total molar concentration of lithium in the electrolytic solution is greater than 0.3 mol/L, greater than 0.4 mol/L, or greater than 0.5 mol/L. In some embodiments, the total molar concentration of lithium in the electrolytic solution is less than 3 mol/L, less than 2.5 mol/L, or less than 2.0 mol/L. In some embodiments, the total molar concentration of lithium in the electrolytic solution is within a range of any two of the above values. When the concentration of the electrolyte is within the above range, there is not too little lithium as a charged particle, and the viscosity can be kept in the proper range, thereby easily ensuring good conductivity.

In the case that two or more electrolytes are used, the electrolytes include at least one salt selected from a group consisting of monofluorophosphate, borate, oxalate, and fluorosulfate. In some embodiments, the electrolyte includes a salt selected from a group consisting of monofluorophosphate, oxalate, and fluorosulfate. In some embodiments, the electrolyte includes lithium salt. In some embodiments, based on the mass of the electrolyte, the content of the salt selected from the group consisting of monofluorophosphate, borate, oxalate, and fluorosulfate is greater than 0.01% or greater than 0.1%. In some embodiments, based on the mass of the electrolyte, the content of the salt selected from the group consisting of monofluorophosphate, borate, oxalate, and fluorosulfate is less than 20% or less than 10%. In some embodiments, the content of the salt selected from the group consisting of monofluorophosphate, borate, oxalate, and fluorosulfate is within a range of any two of the above values.

In some embodiments, the electrolyte includes one or more material selected from the group consisting of monofluorophosphate, borate, oxalate and fluorosulfonate and more than one other salt. As other salts, the lithium salts exemplified above may be cited, in some embodiments, LiPF₆, LiN(FSO₂)(CF₃SO₂), LiN(CF₃SO₂)₂, LiN(C₂F₅SO₂)₂, cyclic 1,2-perfluoroethylene bis(sulfoximide) lithium, cyclic 1,3-perfluoropropane bis(sulfoximide) lithium, LiC(FSO₂)₃, LiC(CF₃SO₂)₃, LiC(C₂F₅SO₂)₃, LiBF₃CF₃, LiBF₃C₂F₅, LiPF₃(CF₃)₃, and LiPF₃(C₂F₅)₃. In some embodiments, the other salts are LiPF₆.

In some embodiments, based on the mass of the electrolyte, the content of the other salts is greater than 0.01% or greater than 0.1%. In some embodiments, based on the mass of the electrolyte, the content of the other salts is less than 20%, less than 15%, or less than 10%. In some embodiments, the content of the other salts is within a range of any two of the above values. The other salts with the above content help to balance the conductivity and viscosity of the electrolytic solution.

### 3. Negative electrode

In some embodiments, the negative electrode includes a negative electrode current collector and a negative active material layer located on one or two surfaces of the negative electrode current collector. The negative active material layer includes a negative active material. The negative active material layer may be one or more, and each of a plurality of negative active material layers may contain the same or different positive electrode active materials. The negative active material is any material capable of reversibly embedding into and de-embedding from metal ions, such as lithium ions. In some embodiments, the rechargeable capacity of the negative active material is greater than the discharge capacity of the negative active material to prevent unintentional precipitation of lithium metal on the negative electrode during charging.

As the current collector for maintaining the negative active material, any well-known current collector may be used. Examples of the negative electrode current collector include, but are not limited to, metallic materials such as aluminum, copper, nickel, stainless steel, and nickel-plated steel. In some embodiments, the negative electrode current collector is copper.

In the case where the negative electrode current collector is a metallic material, the negative electrode current collector form may include, but is not limited to, a metal foil, a metal cylinder, a metal strip roll, a metal plate, a metal film, a metal plate mesh, a stamped metal, a foamed metal, and the like. In some embodiments, the negative electrode current collector is the metal film. In some embodiments, the negative electrode current collector is the copper foil. In some embodiments, the negative electrode current collector is a calendered copper foil based on a calendering method or an electrolyzed copper foil based on an electrolysis method.

In some embodiments, a thickness of the negative electrode current collector is greater than 1 µm or greater than 5 µm. In some embodiments, the thickness of the negative electrode current collector is less than 100 µm or less than 50 µm. In some embodiments, the thickness of the negative electrode current collector is within a range of any two of the above values.

There is no particular limitation on the negative active material, as long as it is capable of reversibly occluding and releasing metal ions. Examples of the negative active material may include, but are not limited to, carbon materials such as natural graphite, and artificial graphite; metals such as silicon (Si), and stannum (Sn); or oxides of metal elements such as Si, and Sn, and the like. The negative active materials may be used alone or used in combination.

In some embodiments, the negative active material layer may further include a negative electrode binder. The negative electrode binder can improve the binding among negative active material particles and the binding between the negative active material and the current collector. There is no special limitation on the type of negative electrode binder, as long as it is a material that is stable for the electrolytic solution or the solvent used in the manufacture of the electrode. In some embodiments, the negative electrode binder includes a resin binder. Examples of the resin binder include, but are not limited to, fluorine resin, polyacrylonitrile (PAN), polyimide resin, acrylic-based resin, polyolefin resin, and the like. When an aqueous solvent is used to prepare a negative electrode composite slurry, the negative electrode binder includes, but is not limited to, carboxymethyl cellulose (CMC) or a salt thereof, styrene-butadiene rubber (SBR), polyacrylic acid (PAA) or a salt thereof, polyvinyl alcohol, and the like.

In some embodiments, the negative electrode may be prepared according to the following method: coating the negative electrode current collector with the negative electrode composite slurry containing the negative active material, the resin binder, or the like, drying, and then calendering to form negative active material layers on both sides of the negative electrode current collector, so as to obtain the negative electrode.

### 4. Separator

In some embodiments, a separator is typically disposed between the positive electrode and the negative electrode in order to prevent short circuits. In this case, the electrolytic solution of this application is typically used by penetrating the separator.

There is no special limitation on the material and shape of the separator, as long as is does not significantly impair the effect of this application. The separator may be a resin, glass fiber, inorganic material, etc. formed from a material for stabilizing the electrolytic solution of this application. In some embodiments, the separator includes a porous sheet with excellent liquid retention, a material in a nonwoven-like form, and the like. Examples of materials of the resin or glass fiber separator may include, but are not limited to, polyolefin, aromatic polyamide, polytetrafluoroethylene, polyethersulfone, and the like. In some embodiments, the polyolefin is polyethylene or polypropylene. In some embodiments, the polyolefin is polypropylene. The materials of the separator may be used alone or used in any combination.

The separator may also be a material formed by laminating the above materials, examples of which include, but are not limited to, a three-layer separator formed by laminating polypropylene, polyethylene and polypropylene in order, and the like.

Examples of the inorganic materials may include, but are not limited to, oxides such as alumina, and silica, nitrides such as aluminum nitride, and silicon nitride, and sulfates (e.g., barium sulfate, and calcium sulfate). The inorganic material form may include, but is not limited to, granular or fibrous.

The form of the separator may be in the form of a film, examples of which include, but are not limited to, nonwoven fabrics, woven fabrics, microporous membranes, and the like. In the form of the film, the separator has a pore size of 0.01 µm to 1 µm and a thickness of 5 µm to 50 µm. In addition to the individual film-like separator described above, the following separator may also be used: a separator formed by forming a composite porous layer containing the above-described inorganic material particles on the surface of the positive electrode and/or the negative electrode by using a resin-based binder, e.g., a separator formed by using fluororesin as a binder to cause 90% of alumina particles having a particle size of less than 1 µm to form porous layers on both sides of the positive electrode.

The thickness of the separator is arbitrary. In some embodiments, the thickness of the separator is greater than 1 µm, greater than 5 µm, or greater than 8 µm. In some embodiments, the thickness of the separator is less than 50 µm, less than 40 µm, or less than 30 µm. In some embodiments, the thickness of the separator is within a range of any two of the above values. When the thickness of the separator is within the above range, the insulativity and mechanical strength can be ensured, and the rate characteristic and energy density of the electrochemical device can also be ensured.

When the porous material such as the porous sheet or the nonwoven fabric is used as the separator, the porosity of the separator is arbitrary. In some embodiments, the porosity of the separator is greater than 10%, greater than 15%, or greater than 20%. In some embodiments, the porosity of the separator is less than 60%, less than 50%, or less than 45%. In some embodiments, the porosity of the separator is within a range of any two of the above values. When the porosity of the separator is within the above range, the insulativity and mechanical strength can be ensured, and the separator resistance can be suppressed, so that the electrochemical device has good safety characteristic.

The average pore size of the separator is arbitrary. In some embodiments, the average pore size of the separator is less than 0.5 µm or less than 0.2 µm. In some embodiments, the average pore size of the separator is greater than 0.05 µm. In some embodiments, the average pore size of the separator is within a range of any two of the above values. If the average pore size of the separator exceeds the above range, short circuits are likely to occur. When the average pore size of the separator is within the above range, the electrochemical device has good safety characteristic.

### 5. Electrochemical device

In some embodiments, the electrochemical device includes an electrode set, a collector structure, an outer shell, and a protective element.

### Electrode set

The electrode set may be any one of a laminated structure formed by the above-described positive electrode and negative electrode laminated across the above-described separator, and a structure in which the above-described positive electrode and negative electrode are coiled in a swirl shape across the above-described separator. In some embodiments, a proportion (electrode set occupancy) of a mass of the electrode set in an internal volume of a battery is greater than 40% or greater than 50%. In some embodiments, the electrode set occupancy is less than 90% or less than 80%. In some embodiments, the electrode set occupancy is within a range of any two of the above values. When the electrode set occupancy is within the above range, the capacity of the electrochemical device can be ensured, and meanwhile, and the degradation of characteristics such as repeated charging and discharging performance and high temperature storage, which are associated with the rise in internal pressure, can be suppressed.

### Collector structure

There is no special limitation on the collector structure. In some embodiments, the collector structure is a structure that reduces the resistance of a wiring portion and a splicing portion. When the electrode set is the above-described laminated structure, a structure formed by bundling a metal core portion of each electrode layer and welding same to a terminal is suitable to be used. When the electrode area of a piece increases, the internal resistance increases, so it is also suitable to reduce the resistance by installing two or more terminals in the electrode. When the electrode set is the above-described coiled structure, more than two lead structures are disposed on the positive electrode and the negative electrode respectively and bundled into terminals, so that the internal resistance can be reduced.

### Outer shell

There is no special limitation on the material of the outer shell, as long as it is a stable material for the electrolytic solution used. The outer shell may use, but is not limited to, a nickel-plated steel plate, stainless steel, aluminum or aluminum alloy, magnesium alloy, and other metals, or a laminated film of resin and aluminum foil. In some embodiments, the outer shell is a metal of aluminum or aluminum alloy, or a laminated film.

The metal-based outer shell includes, but is not limited to, encapsulated hermetic structures formed by fusing metals to each other by laser welding, resistance welding, or ultrasonic welding; or riveted structures formed by using the above metals across resin-based gaskets. The outer shell using the above laminated film includes, but is not limited to, encapsulated hermetic structures formed by hot bonding of resin layers, and the like. In order to improve the leakproofness, a resin different from the resin used in the laminated film may also be sandwiched between the above resin layers. In the case where a hermetic structure is formed by hot bonding of the resin layers by a collector terminal, a resin having a polar group or a modified resin into which a polar group has been introduced may be used as the resin to be sandwiched due to the bonding of the metal to the resin. In addition, the shape of the outer shell is arbitrary, for example, may be any one of cylindrical, square, laminated, in a button type, large, etc.

### Protective element

The protective element may be used in a positive temperature coefficient (PTC), which increases resistance when abnormal heat release or excessive current flow occurs, temperature fuses, thermistors, valves (current shut-off valves) that cut off the current flowing in circuits by causing the internal pressure or internal temperature of the battery to rise sharply when abnormal heat release occurs, and the like. The above protective element may be selected from elements that do not operate under conditions of regular use at high currents, or may be designed in such a way that abnormal heat release or thermal runaway does not occur even if no protective element is present.

### 6. Application

The electrochemical device of this application includes any apparatus in which an electrochemical reaction occurs, and specific examples of the electrochemical device include all kinds of primary batteries, secondary batteries, fuel cells, solar cells, or capacitors. In particular, the electrochemical device is a lithium secondary battery, including a lithium metal secondary battery or a lithium ion secondary battery.

This application further provides an electronic device. The electronic device the electrochemical device described according to this application.

The use of the electrochemical device of this application is not specifically limited and the electrochemical device may be used in any electronic device known in the prior art. In some embodiments, the electrochemical device of this application may be used in, but is not limited to, a notebook computer, a pen-input computer, a mobile computer, an electronic book player, a portable phone, a portable fax machine, a portable copier, a portable printer, a headphone, a video recorder, a liquid crystal television, a hand-held cleaner, a portable CD machine, a mini disc, a transceiver, an electronic organizer, a calculator, a memory card, a portable audio recorder, a radio, a backup power supply, a motor, an automobile, a motorcycle, a power bicycle, a bicycle, a lighting appliance, a toy, a game machine, a clock, a power tool, a flash light, a camera, a large household storage battery, a lithium-ion capacitor, etc.

A lithium-ion battery is used as an example and the preparation of the lithium-ion battery is illustrated in combination with specific embodiments. A person skilled in the art should understand that a preparation method described in this application is only an example, and any other suitable preparation methods are within the scope of this application.

### Embodiment

Performance evaluation is performed based on an embodiment and a comparative embodiment of a lithium-ion battery according to this application in the following descriptions.

### I . Preparation of lithium-ion battery

### 1. Preparation of negative electrode

Mix artificial graphite, styrene-butadiene rubber and sodium carboxymethyl cellulose with deionized water in a mass ratio of 96%: 2%: 2%, and stir uniformly, to obtain a slurry. Coat a copper foil of 9 µm with the slurry. Perform drying and cold pressing, then cut into pieces, and weld a tab, to obtain a negative electrode.

### 2. Preparation of positive electrode

Mix a positive active material (e.g., lithium cobalt oxide), Super-P, and polyvinylidene difluoride with N-methylpyrrolidone (NMP) in a mass ratio of (95-99%): (0.1-5%): (0.1-5%), and stir uniformly, to obtain a positive electrode slurry. Coat an aluminum foil of 12 µm with the positive electrode slurry, perform drying and cold pressing, then cut into pieces, and weld a tab, to obtain a positive electrode.

### 3. Preparing of electrolytic solution

Under a dry argon environment, mix EC, PP and DEC (a mass ratio of 1:1:1), add LiPF₆, and mix uniformly, to form a base electrolytic solution, where the content of LiPF₆ is 12%. Add different contents of additives into the base electrolytic solution to obtain electrolytic solutions of different embodiments and comparative embodiments. The mass percentage of each material in the electrolytic solution is calculated based on the total mass of the electrolytic solution.

The abbreviations and names of components in the electrolytic solution are shown in the table below:

| **Material name** | **Abbreviati on** | **Material name** | **Abbreviati on** |
|---|---|---|---|
| Ethylene carbonate | EC | Propyl propionate | PP |
| Diethyl ethyl carbonate | DEC | Fluoroethylene carbonate | FEC |
| Succinonitrile | SN | Adipic dinitrile | ADN |
| Ethylene glycol bis(2-cyanoethyl) ether | EDN | 1,3,6-hexanetricarboni trile | HTCN |
| 1,2,3-tris(2-cyanoethoxy)pr opane | TCEP | 1,3-propane sutone | PS |
| Compound of Formula 1 | Formula 1 | Compound of Formula 2 | Formula 2 |
| Compound of Formula 3 | Formula 3 | Compound of Formula 4 | Formula 4 |
| Lithium difluorophosphate | LiPO₂F₂ | Ethylene sulfate | DTD |
| Vinylethylene carbonate | VC | 1-propyl phosphate cyclic anhydride | T3P |

### 4. Preparation of separator

A polyethylene porous membrane with an aluminum oxide coating is used as a separator, with a thickness of 9 µm.

### 5. Preparation of lithium-ion battery

The obtained positive electrode, separator and negative electrode are wound in sequence and placed in an outer packaging foil, reserving a liquid injection port. The electrolytic solution is injected via the liquid injection port, packaging is performed, and formation, capacity and other procedures are performed to obtain a lithium-ion battery.

### II. Test method

### 1. Test method for direct current internal resistance of lithium-ion battery at high temperature and high voltage

At 65°C, the lithium-ion battery is charged to 4.7 V at a constant current of 1.5 C, then charged to 0.05 C at a constant voltage of 4.7 V, and left to stand for 30 minutes. The lithium-ion battery is discharged at 0.1 C for 10 seconds, a voltage value being recorded as U1, and the lithium-ion battery is discharged at 1 C for 360 seconds, a voltage value being recorded as U2. The charging and discharging steps are repeated 5 times. "1 C" is the current value at which the capacity of the lithium-ion battery is completely discharged within one hour.

The direct current resistance R of the lithium-ion battery at 65°C is calculated by the following formula:
$R = \left(U2-U1\right) / \left(1C-0.1C\right) .$

### 2. Test method for floating charge performance of lithium-ion battery at high temperature and high voltage

At 25°C, the lithium-ion battery is discharged to 4.7 V at 0.5 C, then charged to 4.7 V at 0.5 C, charged to 0.05 C at a constant voltage of 4.7 V, put into an oven of 50°C and charged at a continuous constant voltage of 4.7 V with 20 mA as a cutoff current, and change in thickness of the lithium-ion battery is monitored. The thickness at the initial 50% state of charge (SOC) is used as a benchmark, an increase in battery thickness of more than 20% is considered as the failure point, and the floating charge time to reach the failure point is recorded.

### 3. Test method for capacity retention rate of lithium-ion battery at high temperature and high voltage

At 45°C, the lithium-ion battery is charged to 4.7 V at a constant current of 1 C, then charged to a current of 0.05 C at a constant voltage, and then discharged to 3.0 V at a constant current of 1 C, which is a primary cycle. 800 times of cycles are performed on the lithium-ion battery according to the above conditions. The capacity retention rate after cycles is calculated according to the following formula: Capacity retention rate = (Discharge capacity after 800 times of cycles/Discharge capacity of primary cycle) x 100%.

### 4. Test method for low-temperature discharge performance of lithium-ion battery

At 25°C, the lithium-ion battery is charged to 4.7 V at a constant current of 0.5 C, charged to 0.05 C at a constant voltage, and then discharged to 3.0 V at a constant current of 0.5 C, which is recorded as a 25°C discharge capacity. At 25°C, the lithium-ion battery is charged to 4.7 V at a constant current of 0.5 C, charged to 0.05 C at a constant voltage, then put in a -20°C thermostat and left to stand for 2 hours, and then discharged to 3.0 V at a constant current of 0.5 C, which is recorded as a -20°C discharge capacity. The discharge percentage of the lithium-ion battery is calculated by the following formula: Discharge percentage = [-20°C discharge capacity/25°C discharge capacity] x 100%.

### 5. Test method for cracking width

A positive electrode plate dismounted from the battery is taken out, and cut in the crack direction with a knife into a rectangular to-be-tested sample of 40 mm (width) × 100 mm (length), and then two smooth and clean glass plates of 2 mm (thickness) × 70 mm (width) × 140 mm (length) are used to clamp the to-be-tested sample to prepare a sample. The cracked side of the sample is placed frontally on a KEYENCE VHX-5000 optical microscope stage, observed using 100× magnification and photographed. Then VHX-5000 software is used to measure the width of the widest part of each crack using a parallel line method (selecting two adjacent points with a largest width therebetween to form a straight line), each crack is measured five times, and the maximum value is taken as the cracking width, i.e., W mm.

### 6. Test method for melting point of fluorine-based binder

The melting point of the fluorine-based binder is measured by the following operation: First, the positive electrode is removed from the battery, cleaned with dimethyl carbonate and then dried, a current collector is removed, and heating and stirring are performed in an appropriate dispersing medium (e.g., N-methylpyrrolidone), thereby dissolving the binder in the dispersing medium. Then, the positive active material is removed by centrifugation, and after filtering a supernatant, the binder can be removed by evaporation or re-precipitation in water. Next, a differential scanning calorimeter (DSC, e.g., Rigaku Thermo plus DSC8230 made by Rigaku Corporation) is used to heat a sample of several mg to dozens of mg at a rate of 1-10 °C/min, and the temperature representing the maximum heat absorption amount among heat absorption peaks appearing in the temperature range of 100°C to 300°C is set as the melting point of the fluorine-based binder.

### 7. Test method for content of fluorine-based binder

The content of the fluorine-based binder is measured by the following operation: First, the positive electrode is removed from the battery, cleaned with dimethyl carbonate and then dried. Next, a differential thermobalance apparatus (TG-DTA, e.g., RigakuThermo plus TG8120 made by Rigaku Corporation) is used to heat a sample of several mg to dozens of mg to 600°C under an air atmosphere at a rate of temperature increase of 1-5 °C/min, and the content of the fluorine-based binder in the positive active material layer is obtained based on the amount of mass reduction at that time. It should be noted that whether the mass reduction is caused by the binder or not can be determined by investigating the degree at which the binder burns by separating the binder and carrying out TG-DTA measurement of only the binder under an air atmosphere as described in the abovementioned test method for the melting point of the binder.

### III. Test result

a) Table 1 shows the effects of the mass percentage (M%) of the positive active material in the positive active material layer and the cracking width (W mm) of the surface of the positive active material layer on direct current internal resistance at high temperature and high voltage and floating charge performance at high temperature and high voltage of the lithium-ion battery. In Table 1, the positive electrode material is lithium cobalt oxide LC9000E from Hunan Shanshan; and the electrolytic solution is the base electrolytic solution. Embodiments 1-2 to 1-13 and comparative embodiments 1-1 to 1-3 differ from Embodiment 1-1 only in the parameters listed in Table 1, and the other parameters are the same.

**Table 1**

| Embodimen ts | M(%) | Lithium cobalt oxide: Super-P: polyvinylidene difluoride (mass ratio) | W (mm) | M/W | Direct current internal resistance (mΩ) | Floating charge time (hour) |
|---|---|---|---|---|---|---|
| Embodimen t 1-1 | 95 | 95:2:3 | 2 | 47.5 | 75.1 | 780 |
| Embodimen t 1-2 | 95 | 95:2:3 | 1.5 | 63.3 | 73.2 | 789 |
| Embodimen t 1-3 | 96 | 96:2:2 | 1 | 96 | 74.5 | 791 |
| Embodimen t 1-4 | 97 | 97:2:1 | 0.8 | 121 | 72.1 | 799 |
| Embodimen t 1-5 | 98 | 98:1:1 | 1 | 98 | 73.8 | 805 |
| Embodimen t 1-6 | 98 | 98:1:1 | 0.8 | 122.5 | 71.5 | 826 |
| Embodimen t 1-7 | 98 | 98:1:1 | 0.5 | 196 | 70.3 | 827 |
| Embodimen t 1-8 | 98 | 98:1:1 | 0.3 | 326.7 | 70.1 | 833 |
| Embodimen t 1-9 | 99 | 99:0.5:0.5 | 0.2 | 495 | 69.2 | 850 |
| Embodimen t 1-10 | 98 | 98:1:1 | 0.1 | 980 | 65.1 | 879 |
| Embodimen t 1-11 | 98 | 98:1:1 | 0.05 | 1960 | 61.3 | 891 |
| Embodimen t 1-12 | 98 | 98:1:1 | 0.01 | 9800 | 54.1 | 910 |
| Embodimen t 1-13 | 98 | 98:1:1 | 0.005 | 19600 | 50.3 | 929 |
| Comparativ e Embodimen t 1-1 | 99.5 | 99.5:0.3:0.2 | 3 | 31.7 | 225.1 | 231 |
| Comparativ e Embodimen t 1-2 | 93 | 93:4:3 | 1.5 | 62 | 90.1 | 457 |
| Comparativ e Embodimen t 1-3 | 94 | 94:3:3 | 2 | 47 | 92.5 | 429 |

Based on the above test results, it can be seen that when the mass fraction of the positive active material is 95% to 99% and the positive electrode satisfies M/W ≥ 47.5, the direct current internal resistance of the lithium-ion battery at high temperature and high voltage and the floating charge performance at high temperature and high voltage are significantly improved. Specifically, a higher mass fraction of the positive active material is more favorable to the improvement of energy density of the battery. However, when the mass fraction of the positive active material exceeds 99%, the proportion of the binder and conductive agent decreases correspondingly, leading to difficulties in processing the electrode sheets and causing obvious cracking. When W ≤ 2, both ionic and electronic conductivity on the surface and inside of the positive electrode can be improved, thereby achieving lower direct current internal resistance and better performance of the electrochemical device. Once the cracking width of the electrode plate is large, for example, more than 2 mm, it may have a serious impact on the ionic and electronic conductivity, resulting in deterioration of the battery performance.

By controlling M and M/W in a suitable range, this application can reduce defects on the surface of the positive electrode such as cracks, pits, craters, and pinholes, effectively inhibit the continuous destruction of a passivation layer on the surface of the positive electrode in the battery charging and discharging cycle, and reduce the number of repairs, thus enabling lithium ions to obtain a smooth de-intercalation channel, and reducing the SOC unevenness on the surface of the electrode plate (i.e., the accumulation of charge carriers in the defects) because the place where the SOC unevenness occurs tends to be the starting point of the deterioration of the electrode plate.

FIG. 1 illustrates an SEM picture of a surface of a positive active material layer in Embodiments 1-8 of this application. The picture shows that the surface of the positive active material layer has a cracking width of 0.3 mm.

B. Table 2 shows the effects of the mass per unit area (M₁ mg/1540.25 mm²) of the positive active material layer and the cracking width (W mm) of the surface of the positive active material layer on direct current internal resistance at high temperature and high voltage and floating charge performance at high temperature and high voltage of the lithium-ion battery. Embodiments 2-1 to 2-15 differ from Embodiment 1-1 only in the parameters listed in Table 2.

**Table 2**

| Embodime nts | M 1 | W (mm) | M₁/W≥ 50 | Direct current internal resistance (mΩ) | Floating charge time (hour) |
|---|---|---|---|---|---|
| 1-1 | 90 | 2 | 45 | 75.1 | 780 |
| 2-1 | 10 0 | 2 | 50 | 71.5 | 796 |
| 2-2 | 15 0 | 1 | 150 | 71.2 | 799 |
| 2-3 | 20 0 | 0.8 | 250 | 70.6 | 822 |
| 2-4 | 20 0 | 1 | 200 | 71.3 | 819 |
| 2-5 | 25 0 | 0.8 | 312.5 | 70.1 | 831 |
| 2-6 | 26 0 | 0.5 | 520 | 69.1 | 834 |
| 2-7 | 27 0 | 0.2 | 1350 | 68.3 | 841 |
| 2-8 | 30 0 | 0.2 | 1500 | 68.1 | 852 |
| 2-9 | 30 0 | 0.1 | 3000 | 64.2 | 880 |
| 2-10 | 40 0 | 0.05 | 8000 | 60.1 | 896 |
| 2-11 | 40 0 | 0.01 | 40000 | 58.1 | 915 |
| 2-12 | 40 0 | 0.005 | 80000 | 50.2 | 931 |
| 2-13 | 80 | 3 | 26.7 | 131.2 | 488 |
| 2-14 | 80 | 1.5 | 53.3 | 94.2 | 450 |
| 2-15 | 42 0 | 2 | 210 | 93.5 | 417 |

Based on the above test results, it can be seen that when the range of M₁ is 100 to 400 and M₁/W ≥ 50 is satisfied, the surface of the positive electrode can maintain structural stability during the charge/discharge cycle, which further reduces the direct current internal resistance of the lithium-ion battery and improves the floating charge performance of the lithium-ion battery.

C. Table 3 shows the effects of the solid content (M₂%) of the coating slurry of the positive active material layer and the cracking width (W mm) of the surface of the positive active material layer on direct current internal resistance at high temperature and high voltage and floating charge performance at high temperature and high voltage of the lithium-ion battery. Embodiments 3-1 to 3-15 differ from Embodiment 1-1 only in the parameters listed in Table 3.

**Table 3**

| Embodiments | M₂ | W (mm) | M₂/W≥27.5 | Direct current internal resistance (mΩ) | Floating charge time (hour) |
|---|---|---|---|---|---|
| 1-1 | 52 | 2 | 26 | 75.1 | 780 |
| 3-1 | 65 | 2 | 37.5 | 68.2 | 812 |
| 3-2 | 70 | 1 | 70 | 67.1 | 835 |
| 3-3 | 70 | 0.8 | 87.5 | 66.9 | 879 |
| 3-4 | 75 | 1 | 75 | 65.3 | 899 |
| 3-5 | 75 | 0.8 | 93.8 | 64.1 | 875 |
| 3-6 | 75 | 0.5 | 150 | 67.2 | 869 |
| 3-7 | 75 | 0.2 | 375 | 66.9 | 871 |
| 3-8 | 80 | 0.2 | 400 | 62.9 | 877 |
| 3-9 | 75 | 0.1 | 750 | 61.8 | 902 |
| 3-10 | 75 | 0.05 | 1500 | 57.2 | 916 |
| 3-11 | 75 | 0.01 | 7500 | 53.1 | 947 |
| 3-12 | 80 | 0.005 | 16000 | 48.5 | 975 |
| 2-6 | 52 | 0.5 | 124 | 69.1 | 834 |
| 2-7 | 52 | 0.2 | 310 | 68.3 | 841 |
| 3-13 | 60 | 3 | 20 | 120.5 | 512 |
| 3-14 | 50 | 1.5 | 33.3 | 96.1 | 479 |
| 3-15 | 85 | 2 | 42.5 | 98.3 | 422 |

Based on the above test results, it can be seen that when the solid content of the coating slurry of the positive active material layer is 55% to 80%, and M₂/W ≥ 27.5 is satisfied, the surface defects of the positive electrode are less, which further reduces the direct current internal resistance of the lithium-ion battery and improves the floating charge performance of the lithium-ion battery.

D. Table 4-1 shows the effects of the melting point of the positive electrode binder on direct current internal resistance at high temperature and high voltage and floating charge performance at high temperature and high voltage of the lithium-ion battery. Embodiments 4-1 to 4-12 differ from Embodiment 1-1 only in the parameters listed in Table 4-1.

**Table 4-1**

| Embodiments | Positive electrode binder (melting point) | Direct current internal resistance (mΩ) | Floating charge time (hour) |
|---|---|---|---|
| 1-1 | Polyvinylidene difluoride (150°C) | 75.1 | 780 |
| 4-1 | Polyvinylidene difluoride (170°C) | 63.1 | 879 |
| 4-2 | Polyvinylidene difluoride (168°C) | 58.9 | 891 |
| 4-3 | Polyvinylidene difluoride (165°C) | 55.3 | 906 |
| 4-4 | Polyvinylidene difluoride (160°C) | 48.1 | 984 |
| 4-5 | Polyvinylidene difluoride (155°C) | 59.3 | 928 |
| 4-6 | Polyvinylidene difluoride (165°C) | 45.2 | 1005 |
| 4-7 | Polyvinylidene difluoride (165°C) | 41.2 | 1231 |
| 4-8 | Polyvinylidene difluoride (175°C) | 70.5 | 789 |
| 4-9 | Polyvinylidene difluoride (225°C) | 71.2 | 801 |
| 4-10 | Polyvinylidene difluoride (250°C) | 71.9 | 812 |
| 4-11 | Polyvinylidene difluoride (270°C) | 72.1 | 831 |
| 4-12 | Polyvinylidene difluoride (280°C) | 68.8 | 758 |

Based on the above test results, it can be seen that when the fluorine-based binder having the melting point in the range of 155°C to 270°C is used, the direct current internal resistance of the lithium-ion battery is further reduced and the floating charge performance of the lithium-ion battery is further improved. The reason may be that when the fluorine-based binder having the melting point in the range of 155°C to 270°C is used, the binder can be uniformly distributed on the surface of the positive electrode material particles in the baking or hot pressing step of an electrode plate preparation process, which effectively improves the adhesion effect, suppresses defects on the surface of the electrode plate, and further improves the performance of the lithium-ion battery.

E. Table 4-2 shows the effects of the type and mass percentage (M₄%) of a positive electrode auxiliary on direct current internal resistance at high temperature and high voltage and floating charge performance at high temperature and high voltage of the lithium-ion battery. Embodiments 4-13 to 4-21 differ from Embodiment 1-1 only in the parameters listed in Table 4-2. A preparation method for a positive electrode in Embodiments 4-13 to 4-21 is as follows: Mix lithium cobalt oxide (Hunan Shanshan LC9000E), Super-P and polyvinylidene difluoride with N-methylpyrrolidone in a mass ratio of 95%: 2%: 3%, and then add the auxiliary in Table 4-2 into the slurry and stir uniformly, to obtain a positive electrode slurry. Coat an aluminum foil of 12 µm with the positive electrode slurry, perform drying and cold pressing, then cut, and weld a tab, to obtain a positive electrode.

**Table 4-2**

| Embodiments | Positive electrode auxiliary (M₄%) | W (mm) | Oxidation potential (V) | Direct current internal resistance (mΩ) | Floating charge time (hour) |
|---|---|---|---|---|---|
| 1-1 | No auxiliary | 2 | | 75.1 | 780 |
| 4-13 | Polyethylene oxide (0.1%) | 3.5 | 4.6 | 56.3 | 840 |
| 4-14 | Polyglycol ether (0.2%) | 2 | 4.7 | 54.2 | 849 |
| 4-15 | Polytetramethyle ne glycol (0.16%) | 2.5 | 4.8 | 45.9 | 851 |
| 4-16 | Polypropylene oxide glycol (0.3%) | 3 | 4.9 | 51.1 | 857 |
| 4-17 | Polypropylene glycol diglycidyl ether (0.12%) | 1 | 5.1 | 50.5 | 877 |
| 4-18 | Polyglycerol-2 oleyl ether (0.08%) | 1.2 | 5.3 | 42.8 | 892 |
| 4-19 | Tripolyglycerol monostearates (0.2%) | 2.3 | 5.5 | 41.2 | 885 |
| 4-20 | Polyethylene glycol glyceryl oleate (0.15%) | 0.5 | 5.6 | 43.5 | 879 |
| 4-21 | Polyglycerol-2 oleyl ether (0.35%)□ | 1 | 5.3 | 62.8 | 890 |

Based on the above test results, it can be seen that when 0.1%-0.3% polymer compound having an ether bond is added to the positive electrode slurry, excellent direct current internal resistance at high temperature and high voltage and floating charge performance at high temperature and high voltage are obtained. In particular, when the oxidation potential of the polymer compound having the ether bond is higher than 4.6 V, the direct current internal resistance of the lithium-ion battery is further reduced and the floating charge performance of the lithium-ion battery is further improved. The reason may be that when the polymer compound having the ether bond is added to the positive electrode slurry, the cracking width of the surface of the positive active material layer can be reduced, to further suppress the surface defects of the electrode plate and improve the performance of the lithium-ion battery at high voltage.

F. Table 5 shows the effects of the type and particle size (D50) of the positive active material and the cracking width of the surface of the positive active material layer on direct current internal resistance at high temperature and high voltage and floating charge performance at high temperature and high voltage of the lithium-ion battery. Embodiments 5-1 to 5-6 differ from Embodiment 1-1 only in the parameters listed in Table 5.

**Table 5**

| Embodiments | Positive active material | D50 (µm) | W (mm) | Relation between D50 and W | Direct current internal resistan ce (mΩ) | Floating charge time (hour) |
|---|---|---|---|---|---|---|
| 1-1 | Lithium cobalt oxide | 15 (D₅) | 2 | 0.15×D₅ ≥ W | 75.1 | 780 |
| 5-1 | Lithium iron phosphate | 1 (D₁) | 0.5 | 2×D₁≥W | 67.8 | 899 |
| 5-2 | Lithium manganes e iron | 0.4 (D₂) | 0.8 | 5×D₂≥W | 61.2 | 905 |
| | phosphate | | | | | |
| 5-3 | Lithium manganat e | 20 (D₃) | 1.2 | 0.1×D₃≥W | 56.3 | 895 |
| 5-4 | Lithium nickel cobalt manganat e | 10 (D₄) | 0.6 | 0.15×D₄ ≥ W | 62.3 | 871 |
| 5-5 | Lithium cobalt oxide and lithium nickel cobalt manganat e (mass ratio of 8:2) | 15 (D₅) | 0.3 | 0.15×D₅≥W | 56.3 | 855 |
| 5-6 | Lithium manganat e oxide and lithium nickel cobalt manganat e (mass ratio of 9:1) | 20 (D₃) | 0.5 | 0.1×D₃≥W | 55.2 | 878 |

Based on the above test results, it can be seen that when the particle size of the positive active material and the cracking width of the surface of the positive active material layer satisfy one of the following conditions, the direct current internal resistance of the lithium-ion battery is further reduced and the floating charge performance of the lithium-ion battery is further improved.
(1) the positive active material includes lithium iron phosphate, and the positive active material has a D50 of D₁ µm, wheren 2 × D₁ ≥ W;
(2) the positive active material includes lithium manganese iron phosphate, and the positive active material has a D50 of D₂ µm, where 5 × D₂ ≥ W;
(3) the positive active material includes lithium manganate, and the positive active material has a D50 of D₃ µm, where 0.1 × D₃ ≥ W;
(4) the positive active material includes lithium nickel cobalt manganate, and the positive active material has a D50 of D₄ µm, where 0.15 × D₄ ≥ W; and
(5) the positive active material includes lithium cobalt oxide, and the positive active material has a D50 of D₅ µm, where 0.15 × D₅ ≥ W.

The reason may be that by selecting a suitable particle size, the flatness of the surface of the positive electrode plate can be further regulated, thereby improving the performance of the lithium-ion battery.

G. Table 6 illustrates the effects of the type and content of an electrolytic solution additive and the mass percentage (M%) of the positive active material on direct current internal resistance at high temperature and high voltage and floating charge performance at high temperature and high voltage of the lithium-ion battery, where based on the total mass of the electrolytic solution, the mass percentage of the additive is a%. Embodiments 6-1 to 6-41 differ from Embodiment 1-1 only in the parameters listed in Table 6.

**Table 6**

| Embodiments | Electrolytic solution additive (Mass %) | M | a | M/a | Direct current internal resistance (mΩ) | Capacity retention rate (%) | Low-temperature Rate (%) | Floating charge time (hour) |
|---|---|---|---|---|---|---|---|---|
| 1-1 | / | 95 | 0 | / | 75.1 | 78.2 | 32 | 780 |
| 6-1 | SN(2%) | 97 | 2 | 48.5 | 68.3 | 80.1 | 34 | 820 |
| 6-2 | ADN(2%) | 97 | 2 | 48.5 | 67.2 | 81.3 | 36 | 825 |
| 6-3 | EDN(2%) | 97 | 2 | 48.5 | 65.8 | 82.7 | 39 | 830 |
| 6-4 | HTCN(2%) | 97 | 2 | 48.5 | 63.9 | 83.1 | 39 | 904 |
| 6-5 | TCEP(2%) | 97 | 2 | 48.5 | 61.1 | 85.2 | 39 | 957 |
| 6-6 | SN(4%)+ADN (3%) | 98 | 7 | 14 | 55.3 | 86.1 | 39 | 865 |
| 6-7 | SN(2%)+EDN( 1%) | 98 | 3 | 32.67 | 54.2 | 86.8 | 39 | 871 |
| 6-8 | SN(2%)+HTC N(1%) | 98 | 3 | 32.67 | 51.5 | 86.9 | 40 | 1021 |
| 6-9 | SN(2%)+TCEP (1%) | 98 | 3 | 32.67 | 49.3 | 87.1 | 40 | 1032 |
| 6-10 | ADN(2%)+ED N(1%) | 98 | 3 | 32.67 | 47.5 | 87.2 | 41 | 859 |
| 6-11 | ADN(2%)+HT CN(1%) | 98 | 3 | 32.67 | 46.3 | 87.5 | 41 | 1026 |
| 6-12 | ADN(2%)+ED N(1)+HTCN(1 %) | 98 | 4 | 24.5 | 44.9 | 88.3 | 42 | 1128 |
| 6-13 | ADN(2%)+ED N(1)+TCEP(1 %) | 98 | 4 | 24.5 | 42.1 | 88.7 | 43 | 1213 |
| 6-14 | ADN(2%)+HT CN(1)+TCEP( | 98 | 4 | 24.5 | 28.5 | 89.1 | 43 | 1352 |
| | 1%) | | | | | | | |
| 6-15 | Formula 1 (1%) | 98 | 1 | 98 | 45.2 | 85.4 | 45 | 842 |
| 6-16 | Formula 2 (1%) | 98 | 1 | 98 | 44.1 | 85.9 | 46 | 836 |
| 6-17 | Formula 3 (1%) | 98 | 1 | 98 | 43.5 | 86.1 | 48 | 856 |
| 6-18 | Formula 4 (1%) | 98 | 1 | 98 | 40.8 | 86.4 | 49 | 861 |
| 6-19 | LiPO₂F₂(0.5%) | 98 | 0. 5 | 196 | 39.5 | 86.7 | 50 | 890 |
| 6-20 | SN (2%) + Formula 1 (1%) | 98 | 3 | 32.67 | 38.6 | 86.8 | 50 | 895 |
| 6-21 | HTCN (2%) + Formula 1 (1%) | 98 | 3 | 32.67 | 37.2 | 86.9 | 51 | 976 |
| 6-22 | TCEP (2%) + Formula 1 (1%) | 98 | 3 | 32.67 | 36.9 | 87.4 | 51 | 989 |
| 6-23 | ADN (2%) + Formula 1 (1%) | 98 | 3 | 32.67 | 35.1 | 87.7 | 54 | 859 |
| 6-24 | SN (2%) + Formula 2 (1%) | 98 | 3 | 32.67 | 33.7 | 88.1 | 55 | 861 |
| 6-25 | HTCN (2%) + Formula 3 (1%) | 98 | 3 | 32.67 | 34.2 | 88.9 | 56 | 1009 |
| 6-26 | TCEP (2%) + Formula 4 (1%) | 98 | 3 | 32.67 | 30.2 | 89.5 | 59 | 1126 |
| 6-27 | SN(2%)+LiPO ₂F₂(0.5%) | 98 | 2. 5 | 39.2 | 29.4 | 90.1 | 59 | 931 |
| 6-28 | ADN(2%)+LiP O₂F₂(0.5%) | 98 | 2. 5 | 39.2 | 28.3 | 90.9 | 60 | 936 |
| 6-29 | HTCN(2%)+Li PO₂F₂(0.5%) | 98 | 2. 5 | 39.2 | 26.5 | 91.5 | 60 | 1007 |
| 6-30 | TCEP(2%)+Li PO₂F₂(0.5%) | 98 | 2. 5 | 39.2 | 25.1 | 91.7 | 61 | 1136 |
| 6-31 | ADN(2%)+ED N(1%)+LiPO₂ F₂(0.5%) | 98 | 3. 5 | 28 | 24.7 | 92.5 | 61 | 997 |
| 6-32 | ADN(2%)+HT CN(1%)+LiPO ₂F₂(0.5%) | 98 | 3. 5 | 28 | 23.6 | 93.6 | 62 | 1325 |
| 6-33 | SN(9%)+ADN (6%) | 95 | 15 | 6.33 | 28.6 | 78.1 | 22 | 801 |
| 6-34 | EDN(2%)+HT CN(1%)+FEC( 4%) | 98 | 7 | 32.67 | 22.1 | 90.3 | 62 | 1021 |
| 6-35 | SN(3%) +HTCN(1%) +PS(1%) | 98 | 5 | 24.5 | 18.5 | 91.2 | 63 | 1124 |
| 6-36 | EDN(2%) +FEC(4%)+DT D(0.5%) | 98 | 6. 5 | 49 | 17.5 | 91.5 | 64 | 1203 |
| 6-37 | ADN(3)+FEC( 4)+T3P(0.5) | 98 | 7. 5 | 32.67 | 15.1 | 92.1 | 66 | 1211 |
| 6-38 | ADN(3%)+ | 98 | 4. | 24.5 | 16.3 | 92.5 | 67 | 1227 |
| | HTCN(1%)+ VC(0.5%) | | 5 | | | | | |
| 6-39 | ADN(3%)+ FEC(4%)+VC( 0.5%) | 98 | 7. 5 | 32.67 | 15.8 | 93.1 | 68 | 1238 |
| 6-40 | HTCN(1%)+F EC(4%)+VC(0 .5%) | 98 | 5. 5 | 98 | 149 | 93.2 | 66 | 1315 |
| 6-41 | TCEP(1%)+FE C(4%)+VC(0.5 %) | 98 | 5. 5 | 98 | 13.2 | 936 | 69 | 1508 |

Based on the above test results, it can be seen that when a compound having a cyano group or a compound having an F-P-O bond is added into the electrolytic solution, excellent direct current internal resistance at high temperature and high voltage and floating charge performance at high temperature and high voltage can be obtained. In particular, when the compound having the cyano group and the compound having the F-P-O bond are used in combination, the surface defects of the electrode plate brought by the decomposition and reconstruction of a protective film on the surface of the positive electrode in the cycling process can be further suppressed, and thus the performance of the lithium-ion battery can be improved.

More specifically, by controlling the content of the additive and the M/a to be in a suitable range, the deterioration of the surface of the electrode plate of the battery due to uneven SOC during cycling can be compensated for, and the additive forms a stable protective film on the surface of the positive electrode, which is especially important for the repair of the defective parts. In a case of M/a ≥ 6.33, the consistency of the surface of the electrode plate is better maintained in the cycling process, thereby not only further improving the direct current internal resistance at high temperature and high voltage and the floating charge performance at high temperature and high voltage, but also, unexpectedly, improving the capacity retention rate at high voltage and the rate performance at low temperature at the same time, which may be attributed to the fact that at both high voltage and low temperature, an interface formed between the positive electrode and the electrolytic solution has good stability and low impedance, which can make de-intercalation of lithium ions easier.

In addition, when the electrolytic solution further includes at least one of fluoroethylene carbonate, 1,3-propane sutone, ethylene sulfate, vinylethylene carbonate, or phosphate cyclic anhydride, the direct current internal resistance at high temperature and high voltage and the floating charge performance at high temperature and high voltage can be further improved.

Throughout the description, references to "some embodiments," "part of embodiments," "an embodiment," "another example," "an example," "a specific example," or "a partial example" are meant to imply that at least one of the embodiments or examples in this application includes a particular feature, structure, material, or characteristic described in that embodiment or example. Thus, the descriptions that appear at various points throughout the description, for example: "in some embodiments," "in embodiments," "in one embodiment," "in another example," "in an example," "in a particular example," or "examples," are not necessarily references to the same embodiments or examples in this application. In addition, the particular features, structures, materials, or characteristics herein may be combined in one or more embodiments or examples in any suitable manner.

Although the illustrative embodiments have been demonstrated and described, a person skilled in the art should understand that the above embodiments are not to be construed as a limitation of this application, and embodiments may be altered, substituted, and modified without departing from the spirit, principles, and scope of this application.

## Claims

1. An electrochemical device, comprising a positive electrode, a negative electrode and an electrolytic solution,
the positive electrode comprising a positive electrode current collector and a positive active material layer located on the positive electrode current collector, and the positive active material layer comprising a positive active material,
wherein based on a mass of the positive active material layer, a mass percentage of the positive active material is M%, a value range of M is 95 to 99,
a cracking width of a surface of the positive active material layer is W mm, and
M and W satisfy: M/W ≥ 47.5.

2. The electrochemical device according to claim 1, wherein W ≤ 2.

3. The electrochemical device according to claim 1, wherein a mass per unit area of the positive active material layer is M₁ mg/1540.25 mm², and a value range of M₁ is 100 to 400, wherein M₁ and W satisfy: M₁/W≥50_{∘}

4. The electrochemical device according to claim 1, wherein a solid content of a coating slurry of the positive active material layer is M₂%, and a value range of M₂ is 55 to 80, wherein M₂ and W satisfy: M₂/W≥27.5_{∘}

5. The electrochemical device according to claim 1, wherein the positive electrode comprises a fluorine-based binder having a melting point in a range of 155 °C to 270 °C.

6. The electrochemical device according to claim 1, wherein the positive active material layer comprises a polymer compound having an ether bond, and based on the mass of the positive active material layer, a mass percentage of the polymer compound having the ether bond is M₄%, where M₄ ≤ 0.3.

7. The electrochemical device according to claim 6, wherein an oxidation potential of the polymer compound having the ether bond is greater than or equal to 4.6 V.

8. The electrochemical device according to claim 1, wherein the electrolytic solution comprises an additive A, and the additive A comprises at least one of a compound having a cyano group or a compound having an F-P-O bond.

9. The electrochemical device according to claim 8, wherein a mass percentage of the additive A is a%, and a value range of a is 0.1 to 15.

10. The electrochemical device according to claim 9, wherein M/a ≥ 6.33.

11. The electrochemical device according to claim 8, wherein the compound having the cyano group comprises at least one of the following compounds: succinonitrile, glutaronitrile, adipic dinitrile, 1,5-dicyanopentane, 1,6-dicyanohexane, tetramethyl succinonitrile, 2-methylglutaronitrile, 2,4-dimethylglutaronitrile, 2,2,4,4-tetramethylglutaronitrile, 1,4-dicyanopentane, 1,2-dicyanobenzene, 1,3-dicyanobenzene, 1,4-dicyanobenzene, ethylene glycol bis(propionitrile) ether, 3,5-dioxane-heptanedinitrile, 1,4-bis(cyanoethoxy)butane, diethylene glycol bis(2-cyanoethyl) ether, triethylene glycol bis(2-cyanoethyl) ether, tetraethylene glycol bis(2-cyanoethyl) ether, 1,3-bis(2-cyanoethoxy)propane, 1,4-bis(2-cyanoethoxy)butane, 1,5-bis(2-cyanoethoxy)pentane, ethylene glycol bis(4-cyanobutyl) ether, 1,4-dicyano-2-butene, 1,4-dicyano-2-methyl-2-butene, 1,4-dicyano-2-ethyl-2-butene, 1,4-dicyano-2,3-dimethyl-2-butene, 1,4-dicyano-2,3-diethyl-2-butene, 1,6-dicyano-3-hexene, 1,6-dicyano-2-methyl-3-hexene, 1,3,5-pentanetricarbonitrile,1,2,3-propanetricarbonitrile, 1,3,6-hexyltricarbonitrile, 1,2,6-hexyltricarbonitrile, 1,2,3-tris(2-cyanoethoxy)propane, 1,2,4-tris(2-cyanoethoxy)butane, 1,1,1-tris(cyanoethoxy methylene)ethane, 1,1,1-tris(cyanoethoxy methylene)propane, 3-methyl-1,3,5-tris(cyanoethoxy)pentane, 1,2,7-tris(cyanoethoxy)heptane, 1,2,6-tris(cyanoethoxy)hexane or 1,2,5-tris(cyanoethoxy)pentane.

12. The electrochemical device according to claim 8, wherein the compound having the F-P-O bond comprises at least one of lithium difluorophosphate, a compound of Formula 1, a compound of Formula 2, a compound of Formula 3, or a compound of Formula 4: 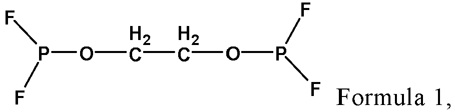 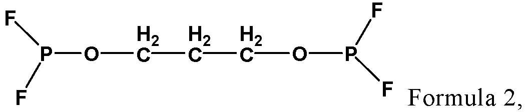 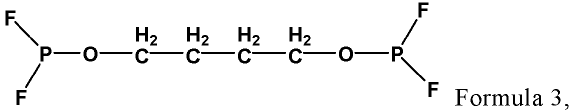 and

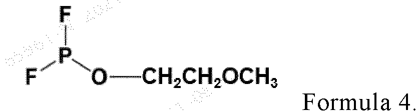

13. The electrochemical device according to claim 1, wherein the positive active material satisfies one of the following conditions:
(1) the positive active material includes lithium iron phosphate, and the positive active material has a D50 of D₁ µm, where 2 × D₁ ≥ W;
(2) the positive active material includes lithium manganese iron phosphate, and the positive active material has a D50 of D₂ µm, where 5 × D₂ ≥ W;
(3) the positive active material includes lithium manganate, and the positive active material has a D50 of D₃ µm, where 0.1 × D₃ ≥ W;
(4) the positive active material includes lithium nickel cobalt manganate, and the positive active material has a D50 of D₄ µm, where 0.15 × D₄ ≥ W; or
(5) the positive active material includes lithium cobalt oxide, and the positive active material has a D50 of D₅ µm, where 0.15 × D₅ ≥ W.

14. The electrochemical device according to claim 8, wherein the electrolytic solution further comprises an additive B, and the additive B comprises at least one of fluoroethylene carbonate, 1,3-propane sutone, ethylene sulfate, vinylethylene carbonate, or phosphate cyclic anhydride.

15. An electronic device, comprising the electrochemical device according to any one of claims 1-14.
